# EUROPÄISCHE PATENTSCHRIFT

(11) **EP 1 528 972 B1**
(45) Veröffentlichungstag und Bekanntmachung des Hinweises auf die Patenterteilung: **17.10.2007**
(21) Anmeldenummer: 03747895.5
(22) Anmeldetag: 13.08.2003
(51) Int. Cl.: B26F 1/02, H01M 10/04

(54) **MIT EINEM STANZMUSTER VERSEHENE FOLIEN UND FOLIENVERBÜNDE, INSBESONDERE FÜR DIE FERTIGUNG VON ELEKTROCHEMISCHEN BAUELEMENTEN**
FILMS AND COMPOUND FILMS WITH AN EMBOSSED PATTERN, PARTICULARLY FOR PRODUCING ELECTROCHEMICAL COMPONENTS
FILMS ET SYSTEMES COMPOSITES DE FILMS A MOTIFS DE PERFORATION, NOTAMMENT CONCUS POUR PRODUIRE DES COMPOSANTS ELECTROCHIMIQUES

(30) Priorität: 16.08.2002 DE 10238354; 13.12.2002 DE 10261920
(43) Veröffentlichungstag der Anmeldung: 11.05.2005
(73) Patentinhaber: Fraunhofer-Gesellschaft zur Förderung der angewandten Forschung e.V., 80686 München (DE)
(72) Erfinder: BONFANTI, Francesco, CH-4627 Fulenbach (CH); FUTSCHER, Heinz, 31061 Alfeld (DE); NEUMANN, Gerold, 25469 Halstenbek (DE)
(74) Vertreter: Olgemöller, Luitgard Maria
(86) Internationale Anmeldenummer: PCT/EP2003/008998
(87) Internationale Veröffentlichungsnummer: WO 2004/018168

(56) Entgegenhaltungen:
- EP-A- 0 781 634
- US-A- 5 537 905
- US-A- 6 030 421
- US-A- 6 132 477

## Beschreibung

Die vorliegende Erfindung betrifft die räumliche Gestalt von Folien mit elektrochemischen Eigenschaften, aus denen Schichtverbünde hergestellt werden können, die als Akkumulatoren, elektrochrome Bauelemente oder dergleichen verwendbar sind.

Seit Beginn der siebziger Jahre hat man versucht, elektrochemische Bauelemente wie Akkumulatoren oder dergleichen in Form dünner Schichten zu erzeugen. Das Ziel ist es, Verbünde zu erhalten, die einerseits so flexibel sind, dass man sie beispielsweise aufrollen oder einer anderen gewünschten Form anpassen kann, und die andererseits durch extrem große Kontaktflächen zwischen den einzelnen elektrochemischen Bestandteilen wie Elektroden und Elektrolyten bezogen auf das eingesetzte Volumen an elektrochemisch aktivem Material besonders günstige Lade- und Entladeeigenschaften erreichen kann.

Die Folientechnologie erfüllt die gestellten Anforderungen in hervorragender Weise. Deshalb werden z.B. für Akkumulatoren Elektroden- bzw. Elektrolytmaterialien in Folienform als Vorprodukte hergestellt, die dann nach anschließender Lamination unter geeigneter Druck- und Temperatureinwirkung zu einem Folienverbund mit den gewünschten elektrochemischen Eigenschaften zusammengefügt werden. Beispiele für die Herstellung solcher Folien sind vielfach in der Patentliteratur oder in der einschlägigen Fachliteratur zu finden und dem Fachmann bekannt.

Die Fertigung elektrochemischer Bauelemente mittels (Endlos-)Folien bietet große ökonomische Vorteile, da eine Folienverarbeitung mit hoher Geschwindigkeit durchgeführt werden kann. Hier sind durchaus einige Meter in der Minute als Vorschubgeschwindigkeit möglich. Jedoch sind in einer solchen Fertigung einige Randbedingungen zu beachten, die einen hohen technischen Aufwand erfordern. Dies liegt insbesondere darin begründet, dass zur Erzielung eines hohen Durchsatzes die unterschiedlichen Folien so lange wie möglich von Rolle zu Rolle oder in großen Bögen verarbeitet werden, um die Anzahl von Handhabungsschritten zu reduzieren. Will man die komplett gestapelten/laminierten Folienverbünde erst nach ihrer Verarbeitung vereinzeln, ist es notwendig, Stanzungen durch den kompletten Folienverbund durchzuführen. Dies bringt jedoch ein gravierendes Problem mit sich, da die Vereinzelung mit Schneidwerkzeugen Schnittkanten durch den kompletten Folienverbund erzeugt. Durch das Schneidwerkzeug kann dabei eine Verschmierung von Materialien aus unterschiedlichen Folien über die Schnittkante erfolgen, was negative Folgen für die Funktionsfähigkeit des elektrochemischen Bauelementes hat. Eine Vereinzelung der unterschiedlichen Folien bereits vor der Lamination dagegen erfordert eine passgenaue Anordnung der Folienelemente zueinander, bevor sie laminiert oder anderweitig verbunden werden. Dies ist jedoch insbesondere bei hohem Fertigungsdurchsatz nur sehr aufwändig zu realisieren.

US-A-6132477 offenbart einen Folienverbund für elektrochemische Bauelemente der während seiner Bearbeitung schräg geschnitten wird. US-A- 5537905 beschreibt eine Folie gemäß dem Obergegriff des Anspruchs 8.

Aufgabe der vorliegenden Erfindung ist es, die oben beschriebene Materialverschleppung entlang der Kanten von laminierten Folienverbünden zu vermeiden, wobei das Verfahren gleichzeitig eine hohe Geschwindigkeit für die Herstellung von laminierten Einzelelementen ermöglichen soll. Insbesondere ist diese Aufgabe auf solche Folienverbünde ausgerichtet, die für bzw. als elektrochemische Bauelemente eingesetzt werden sollen.

Dies Aufgabe wird erfindungsgemäß durch einen Folienverbund gemäß Anspruch 1 und eine Folie gemäß Anspruch 8 gelöst.

Diese Aufgabe wird durch die Bereitstellung von Folien mit einem spezifischen Stanzmuster ähnlich einer Perforation gelöst, das die Schnittkanten für die spätere Vereinzelung von Verbünden aus solchen miteinander laminierten oder anderes zusammengefügten Folien mittels Schneiden oder auf andere Weise vorgibt. Dabei definiert die Stanzung mindestens eine, in der Regel mehrere Trennlinien, die z.B. rechtwinklig zueinander angeordnet sein können und die in einem regelhaften Muster durch Stege unterbrochen sind. Diese Stege nehmen eine Breite ein, die durchschnittlich geringer ist als der durchschnittliche Abstand zwischen zwei Stegen. Insbesondere ist es bevorzugt, dass die Breite eines jeden Steges geringer ist als der Abstand dieses Steges zu den ihm benachbarten Stegen. Auch ist es gegebenenfalls bevorzugt und in manchen Fällen notwendig (so, wenn drei erfindungsgemäße Folien im Folienverbund vorgesehen sind), dass die Breite der Stege durchschnittlich nicht mehr als die Hälfte des durchschnittlichen Abstandes zwischen zwei Stegen beträgt.

Die erfindungsgemäßen Folien erlauben einerseits die Verarbeitung der jeweiligen Folien von Rolle zu Rolle bzw. in großen Blättern, und sie lassen sich andererseits derart übereinander anordnen, dass ihre für das spätere Schneiden oder dergleichen vorgesehene Trennlinien aufeinander liegen, während die Stege dieser Trennlinien versetzt angeordnet sind, so dass diese nirgends übereinander zu liegen kommen. Bei der abschließenden Vereinzelung entsteht daher an keiner Stelle eine Schnittkante mit Verschmierungen der Bestandteile der Einzelfolien des Folienverbundes, so dass es zu keiner Berührung der Materialien der verschiedenen Folien kommen kann.

In einer bevorzugten Ausgestaltung der Erfindung definiert die Stanzung mindestens in einer Richtung (y) parallel verlaufende Trennlinien, die so auf dem (in der x,y-Ebene liegenden) Folienbogen oder -blatt oder der Folienrolle angeordnet sind, dass die Stege bei einer Spiegelung durch die Folienmitte senkrecht durch diese Trennlinien (d.h. bei einer Spiegelung an einer mittig angeordneten Ebene in x,z-Richtung) nicht auf den Stegen der nicht gespiegelten Folie zu liegen kommen. Werden zwei solche Folien miteinander laminiert, während die eine seitenverkehrt bezüglich der genannten x,z-Ebene zur anderen liegt, können die Stege der Trennlinien in y-Richtung in gewünschter Weise nicht überlappen.

In einer zweiten bevorzugten Ausgestaltung definiert die Stanzung senkrecht zueinander verlaufende Trennlinien. Die Stege der einen oder mehreren in einer ersten Richtung (x) verlaufenden Trennlinien sind so angeordnet, dass sie bei einer Spiegelung an einer Spiegelebene (y,z), die die Folie mittig und senkrecht zu dieser ersten Richtung durchschneidet, nicht auf den Stegen der nicht gespiegelten Folie zu liegen kommen. Werden zwei solche Folien miteinander laminiert, während das Kopfende (in x-Richtung gesehen) der einen Folie über dem Fußende (in derselben Richtung gesehen) der anderen Folie liegt, können die Stege der Trennlinien in x-Richtung in gewünschter Weise nicht überlappen.

Ganz besonders bevorzugt ist es, die Merkmale der beiden voranstehenden bevorzugten Ausführungsformen miteinander zu kombinieren, und zwar derart, dass ein Stanzmuster mit mindestens einer Trennlinie in x-Richtung und mehreren Trennlinien in y-Richung entsteht, dessen Stege, und zwar sowohl diejenigen der Trennlinie(n) in x-Richtung als auch diejenigen der Trennlinien in y-Richtung, bei einer Drehung um eine zentrische, senkrecht zur Folienebene (x,y) stehende Achse z nicht übereinander zu liegen kommen. Man kann bei dieser Ausgestaltung beide Folien eines späteren Laminats mit genau demselben Stanzmuster versehen, also mit denselben Maschinen bearbeiten, ohne deren Einstellungen verändern zu müssen, und kann sie für den Folienverbund so übereinander anordnen, dass die erste Folie gewendet und um 180° gedreht über der zweiten Folie zu liegen kommt. Bei dieser räumlichen Lage zueinander können die Stege der beiden Folien nicht überlappen.

Alternativ kann es aber auch günstig sein, Stanzmuster mit anderen Regelhaftigkeiten zu erzeugen, derart, dass das Stanzmuster der ersten zu laminierenden Folie nicht mit demjenigen der zweiten zu laminierenden Folie in Deckung zu bringen ist. Solche Asymmetrien könnten helfen, die Gefahr von möglicherweise fehlerhaften Stapelungen beim Aufeinanderlegen unterschiedlicher Folien zu vermeiden.

Wenn die erfindungsgemäßen Folien als Kathodenfolie oder Anodenfolie vorgesehen sind, sind sie in der Regel bereits mit einer vorzugsweise netzartigen Ableiterfolie laminiert, deren Stromableiter über die Seitenränder der Folien herausragen. Folienverbünde mit solchen Folien wird man nur derart vereinzeln, dass in (der kürzeren) Querrichtung nicht mehr als zwei Bauelemente nebeneinander auf der Grundfläche des Folienverbundes vorgesehen sind, deren Ableiter seitlich aus der Folie ragen. Mit anderen Worten: Derartige Folien werden gar keine oder höchstens eine Trennlinie in der (längeren) x-Achse besitzen. Werden in diesen Ausgestaltungen mit einer mittleren Trennlinie die Stromableiter ausreichend schmal gehalten und bezüglich der Seite, aus der sie herausragen, asymmetrisch, aber links und rechts symmetrisch zueinander angeordnet, können die Folien wie in der zweiten bevorzugten Ausgestaltung sowie in der als besonders bevorzugt genannten Ausgestaltung beschrieben übereinander gelegt werden, ohne dass die Stromableiter von Kathode und Anode einander berühren könnten.

Um die exakte Positionierung der einzelnen Folien zueinander bei der Stapelung zu vereinfachen, kann es vorteilhaft sein, bei der Folienvorstanzung für die späteren Schnittlinien gleichzeitig Löcher für Positionierstifte vorzusehen. Solche Positionieröffnungen können in der Mitte des jeweiligen Elementes, aber auch an anderen Stellen der Folien angebracht werden, z.B. in den Stegen der Trennlinien-Stanzung.

Das Herstellen der gestanzten Folien erfolgt in Stanzwerkzeugen, wie sie aus dem Stand der Technik bekannt sind. Bevorzugt ist ein Verfahren, bei dem ein Niederhalter die zu stanzende Folie fest auf die Unterlage drückt. Dann fährt ein Hohlkehlmesser durch einen Schlitz im Niederhalter herunter. Dieses Messer führt den Schnitt durch und drückt das dabei abgetrennte Material nach unten, so dass es aus dem Stegbereich entfernt wird.

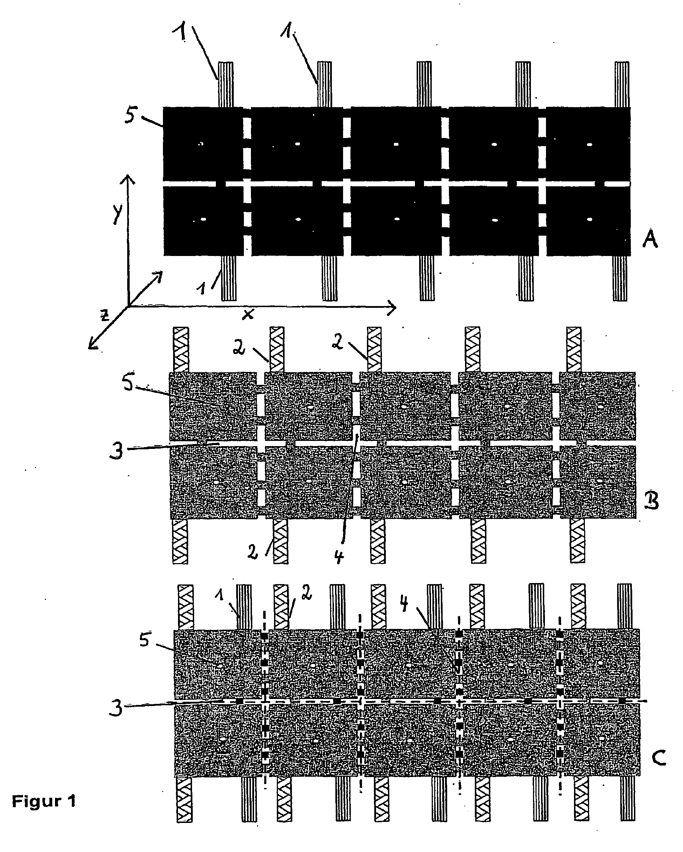

In **Figur 1** ist ein Beispiel einer erfindungsgemäßen Folie gezeigt. Diese Folien sind z.B. für die Fertigung von folienbasierten Akkumulatoren vorgesehen, die aus drei Folien bestehen: der Anode A, der Kathode B und dem Separator. Der Separator trennt Anode und Kathode elektronisch und kann daher ohne Vorstanzung zwischen die beiden Elektrodenfolien gelegt werden. Aus den jeweiligen Elektrodenfolien ragen die zugehörigen Stromableiter 1,2 hervor, die durch die Schraffur angedeutet sind. Wenn die gestanzte Folie B auf die gestanzte Folie A gelegt wird, erhält man eine Anordnung wie in C gezeigt. Als Trennung zwischen der Anode A und der Kathode B wird noch der Separator eingefügt. Dieser muss nicht vorgestanzt werden und ist in den Zeichnungen der Figur 1 deshalb nicht berücksichtigt. Entlang der durch gestrichelte Linien dargestellten Trennlinien 3 in x-Richtung und 4 in y-Richtung lassen sich nun aus dem Folienverbund C die einzelnen Elemente mit einem Schneidwerkzeug so trennen, dass das Schneidmesser an keiner Stelle durch alle Folien gleichzeitig schneidet, sondern nur durch die jeweiligen, gegeneinander versetzten Stege der einzelnen Folien. Die in Figur 1 dargestellte Stanzung der Folien ist ein konkretes Beispiel für die oben als besonders bevorzugt genannte Ausführungsform, bei der das Stanzmuster der Folien A und B in der Weise symmetrisch ist, dass beide Folien mit dem gleichen Stanzwerkzeug vorgestanzt werden können und das Muster der Folie B durch eine einfache Drehspiegelung in das Muster der Folie A überführt werden kann.

In Figur 1 sind weiterhin Öffnungen für Positionierstifte vorgesehen, die mit dem Bezugszeichen 5 gekennzeichnet sind. Die Lage der Positionieröffnungen befindet sich in diesem Beispiel in der Mitte des jeweiligen Feldes, das die Abmessungen des späteren Bauelements vorgibt.

## Patentansprüche

1. Folienverbund mit mindestens zwei mit einem Stanzmuster versehenen Folien, wobei die Stanzung jeder Folie mindestens eine Trennlinie definiert, die in einem regelhaften Muster durch Stege unterbrochen ist, und diese Stege eine Breite einnehmen, die durchschnittlich geringer ist als der durchschnittliche Abstand zwischen zwei Stegen, wobei die Folien derart versetzt übereinander angeordnet sind, dass ihre für das spätere Scheiden oder der gleichen vorgesehene Trennlinien aufeinander liegen und dass die Stege der ersten Folie und die Stege der zweiten Folie nicht übereinander zu liegen kommen.

2. Folienverbund nach Anspruch 1, **dadurch gekennzeichnet, dass** bei jeder Folie die Breite eines jeden Steges geringer ist als der Abstand dieses Steges zu den ihm benachbarten Stegen.

3. Folienverbund nach einem der Ansprüche 1 oder 2, **dadurch gekennzeichnet, dass** die Stanzung jeder Folie mindestens in einer Richtung (y) parallel verlaufende Trennlinien definiert und bei einer Spiegelung jeder Folie an einer Spiegelebene (x,z), die die Folie mittig und senkrecht zu diesen Trennlinien durchschneidet, die Stege dieser Trennlinie nicht auf den Stegen der nicht gespiegelten Folie zu liegen kommen würden.

4. Folienverbund nach einem der voranstehenden Ansprüche, **dadurch gekennzeichnet, dass** die Stanzung jeder Folie senkrecht zueinander verlaufende Trennlinien definiert und dass die Stege der in einer ersten Richtung (x) verlaufenden Trennlinie(n) bei einer Spiegelung jeder Folie an einer Spiegelebene (y,z), die die Folie mittig und senkrecht zu dieser ersten Richtung durchschneidet, nicht auf den Stegen der nicht gespiegelten Folie zu liegen kommen würden.

5. Folienverbund nach einem der voranstehenden Ansprüche, **dadurch gekennzeichnet, dass** die Stege jeder Folie so angeordnet sind, dass sie bei einer Drehung um eine senkrecht zur Flächenebene stehende, mittige Drehachse (z) um 180° nicht auf den Stegen einer ebensolchen nicht gedrehten Folie zu liegen kommen würden.

6. Folienverbund nach einem der voranstehenden Ansprüche, **dadurch gekennzeichnet, dass** die beiden Folien dasselbe Stanzmuster aufweisen und die zweite Folie im Verhältnis zur ersten Folie um 180° um ihre Flächenachse (x,y) gedreht angeordnet ist.

7. Verwendung eines Folienverbundes nach Anspruch 1 bis 6 zur Herstellung von elektrochemischen oder elektrochromen Bauelementen.

8. Mit einem Stanzmuster versehene Folie, die zum Verbinden mit einer weiteren Folie vorgesehen ist, wobei die Stanzung mindestens eine Trennlinie definiert, die in einem regelhaften Muster durch Stege unterbrochen ist, und diese Stege eine Breite einnehmen, die durchschnittlich geringer ist als der durchschnittliche Abstand zwischen zwei Stegen, **dadurch gekennzeichnet, dass** die Stanzung mindestens in einer Richtung (y) parallel verlaufende Trennlinien definiert und bei einer Spiegelung der Folie an einer Spiegelebene (x,z), die die Folie mittig und senkrecht zu diesen Trennlinien durchschneidet, die Stege dieser Trennlinie nicht auf den Stegen der nicht gespiegelten Folie zu liegen kommen.

9. Mit einem Stanzmuster versehene Folie nach Anspruch 8, **dadurch gekennzeichnet, dass** die Breite eines jeden Steges geringer ist als der Abstand dieses Steges zu den ihm benachbarten Stegen.

10. Mit einem Stanzmuster versehene Folie nach einem der Ansprüche 8 oder 9, **dadurch gekennzeichnet**, das die Stanzung senkrecht zueinander verlaufende Trennlinien definiert und dass die Stege der in einer ersten Richtung (x) verlaufenden Trennlinie(n) bei einer Spiegelung der Folie an einer Spiegelebene (y,z), die die Folie mittig und senkrecht zu dieser ersten Richtung durchschneidet, nicht auf den Stegen der nicht gespiegelten Folie zu liegen kommen.

11. Mit einem Stanzmuster versehene Folie nach einem der Ansprüche 8 bis 10, **dadurch gekennzeichnet, dass** die Stege so angeordnet sind, dass sie bei einer Drehung um eine senkrecht zur Flächenebene stehende, mittige Drehachse (z) um 180° nicht auf den Stegen der nicht gedrehten Folie zu liegen kommen.

12. Mit einem Stanzmuster versehene Folie nach einem der Ansprüche 8 bis 11 mit solchen Bestandteilen, dass sie zur Verwendung in einem elektrochemischen oder elektrochromen Bauelement in Folienbauweise geeignet ist.

13. Mit einem Stanzmuster versehene Folie nach Anspruch 12, **dadurch gekennzeichnet, dass** es sich um eine Kathodenfolie oder eine Anodenfolie handelt.

14. Mit einem Stanzmüster versehene Folie nach einem der Ansprüche 8 bis 13, **dadurch gekennzeichnet, dass** sie Öffnungen aufweist, die sich als Positionierlöcher eignen.

## Claims

1. A composite foil structure comprising at least two foils, films or sheets punched in a pattern, wherein the punched part of each foil defines at least one parting line interrupted in a regular pattern by webs, and the webs have a width which is smaller on average than the average distance between two webs, wherein the foils are offset over one another so that the parting lines therein for subsequent cutting or the like lie on one another and the webs of the first foil are not superposed on the webs of the second foil.

2. A composite according to claim 1, **characterised in that** in the case of each foil the width of each web is less than the distance between the web and the neighbouring webs.

3. A composite according to claim 1 or 2, **characterised in that** the punched part of each foil defines parallel parting lines in at least one direction (y) and when each foil is reflected in a plane (x, y) which intersects the foils centrally and at right angles to the parting line(s), the webs on the parting line(s) do not come to rest on the webs of the non-reflected foil.

4. A composite according to any of the preceding claims, **characterised in that** the punched part of each foil defines parting lines perpendicular to one another and when each foil is reflected in a plane (y, z) which intersects the foil centrally and at right angles to a first direction (x) the webs in the parting line(s) extending in the said direction do not come to rest on the webs of the non-reflected foil.

5. A composite according to any of the preceding claims, **characterised in that** the webs of each foil are so disposed that if rotated through 180° around a central axis (z) at right angles to the plane they do not come to rest on the webs of a said foil which has not been rotated.

6. A composite according to any of the preceding claims, **characterised in that** the two foils have the same punched pattern and the second foil, relative to the first foil, is rotated through 180° around the axis (x, y) through its plane.

7. Use of a composite according to claims 1 to 6 for producing electrochemical or electrochromic components.

8. A foil punched in a pattern and intended for joining to another foil, wherein the punching defines at least one parting line interrupted by webs in a regular pattern, and the webs have a width which is smaller on average than the average distance between two webs, **characterised in that** the punching defines parallel parting lines in at least one direction (y) and when the foil is reflected in a plane (x, z) which intersects the foil centrally and at right angles to the parting lines, the webs on the parting line do not come to rest on the webs of the non-reflected foil.

9. A foil punched in a pattern according to claim 8, **characterised in that** the width of each web is less than the distance between the web and the neighbouring webs.

10. A foil punched in a pattern according to claim 8 or 9, **characterised in that** the punching defines parting lines perpendicular to one another and the webs on the parting line(s) in a first direction (x), when the foil has been reflected in a plane (y, z) intersecting the foil centrally and at right angles to the said first direction, the webs in the said parting line(s) do not come to rest on the webs of the non-rotated foil.

11. A foil punched in a pattern according to any of claims 8 to 10, **characterised in that** the webs are so disposed that if rotated through 180° around a central axis (z) at right angles to the plane they do not come to rest on the webs of the non-rotated foil.

12. A foil punched in a pattern according to any of claims 8 to 11 and comprising components suitable for use in an electrochemical or electrochromic component constructed from foils.

13. A foil punched in a pattern according to claim 12, **characterised in that** it is a cathode foil or an anode foil.

14. A foil punched in a pattern according to any of claims 8 to 13, **characterised in that** it has openings which are suitable as positioning holes.

## Revendications

1. Système composite de films comprenant au moins deux films munis d'un motif de poinçonnage, le poinçonnage de chaque film définissant au moins une ligne de séparation interrompue par des membrures suivant un motif régulier, et ces membrures adoptant une largeur en moyenne plus faible que l'espacement moyen entre deux membrures, sachant que les films sont agencés en une superposition décalée telle que leurs lignes de séparation, prévues pour le sectionnement ultérieur ou pour une opération similaire, se trouvent les unes sur les autres, et que les membrures du premier film ne viennent pas en superposition avec les membrures du second film.

2. Système composite de films, selon la revendication 1, **caractérisé par le fait que**, pour chaque film, la largeur de chacune des membrures est inférieure à la distance séparant cette membrure des membrures qui en sont voisines.

3. Système composite de films, selon l'une des revendications 1 ou 2, **caractérisé par le fait que** le poinçonnage de chaque film définit des lignes de séparation s'étendant parallèlement au moins dans une direction (y) et, dans le cas d'une disposition spéculaire de chaque film sur un plan spéculaire (x, z) coupant ledit film centralement et perpendiculairement à ces lignes de séparation, les membrures de cette ligne de séparation ne viendraient pas s'appliquer sur les membrures du film non disposé spéculairement.

4. Système composite de films, selon l'une des revendications précédentes, **caractérisé par le fait que** le poinçonnage de chaque film définit des lignes de séparation s'étendant perpendiculairement les unes aux autres ; et **par le fait que** les membrures de la ou des ligne(s) s'étendant dans une première direction (X), dans le cas d'une disposition spéculaire de chaque film sur un plan spéculaire (y, z) coupant ledit film centralement et perpendiculairement à cette première direction, ne viendraient pas s'appliquer sur les membrures du film non disposé spéculairement.

5. Système composite de films, selon l'une des revendications précédentes, **caractérisé par le fait que** les membrures de chaque film sont disposées de façon telle que, lors d'une rotation de 180° autour d'un axe médian de rotation (z) se dressant perpendiculairement au plan de surface, lesdites membrures ne viendraient pas s'appliquer sur les membrures d'un tel film non animé d'une rotation.

6. Système composite de films, selon l'une des revendications précédentes, **caractérisé par le fait que** les deux films présentent le même motif de poinçonnage et le second film occupe, par rapport au premier film, une position prise par rotation de 180° autour de l'axe (x, y) de sa surface.

7. Utilisation d'un système composite de films selon les revendications 1 à 6, pour la production de composants électrochimiques ou électrochromes.

8. Film muni d'un motif de poinçonnage et prévu pour être relié à un autre film, le poinçonnage définissant au moins une ligne de séparation interrompue par des membrures suivant un motif régulier, et ces membrures adoptant une largeur en moyenne plus faible que l'espacement moyen entre deux membrures, **caractérisé par le fait que** le poinçonnage définit des lignes de séparation s'étendant parallèlement au moins dans une direction (y) et, dans le cas d'une disposition spéculaire du film sur un plan spéculaire (x, z) coupant ledit film centralement et perpendiculairement à ces lignes de séparation, les membrures de cette ligne de séparation ne viennent pas s'appliquer sur les membrures du film non disposé spéculairement.

9. Film muni d'un motif de poinçonnage, selon la revendication 8, **caractérisé par le fait que** la largeur de chacune des membrures est inférieure à la distance séparant cette membrure des membrures qui en sont voisines.

10. Film muni d'un motif de poinçonnage, selon l'une des revendications 8 ou 9, **caractérisé par le fait que** le poinçonnage définit des lignes de séparation s'étendant perpendiculairement les unes aux autres ; et **par le fait que** les membrures de la ou des ligne(s) s'étendant dans une première direction (x), dans le cas d'une disposition spéculaire du film sur un plan spéculaire (y, z) coupant ledit film centralement et perpendiculairement à cette première direction,
ne viennent pas s'appliquer sur les membrures du film non disposé spéculairement.

11. Film muni d'un motif de poinçonnage, selon l'une des revendications 8 à 10, **caractérisé par le fait que** les membrures sont disposées de façon telle que, lors d'une rotation de 180° autour d'un axe médian de rotation (z) se dressant perpendiculairement au plan de surface, lesdites membrures ne viennent pas s'appliquer sur les membrures du film non animé d'une rotation.

12. Film muni d'un motif de poinçonnage, selon l'une des revendications 8 à 11, présentant des éléments constitutifs tels qu'il se prête à l'utilisation, en mode pelliculaire, dans un composant électrochimique ou électrochrome.

13. Film muni d'un motif de poinçonnage, selon la revendication 12, **caractérisé par le fait qu'**il s'agit d'un film cathodique ou d'un film anodique.

14. Film muni d'un motif de poinçonnage, selon l'une des revendications 8 à 13, **caractérisé par le fait qu'**il comporte des orifices appropriés en tant que trous de positionnement.
